# EUROPEAN PATENT SPECIFICATION

(11) **EP 3 132 886 B1**
(45) Date of publication and mention of the grant of the patent: **29.11.2017**
(21) Application number: 16184919.5
(22) Date of filing: 19.08.2016
(51) Int. Cl.: B23K 37/053, B23K 31/02, B23K 37/047, B23Q 3/06, B23K 101/06

(54) **A TUBE ROTATOR DEVICE AND A SYSTEM FOR ROTATING TUBES**
ROHRROTATORVORRICHTUNG UND SYSTEM ZUR ROTATION VON ROHREN
DISPOSITIF ROTATEUR DE TUBE ET SYSTÈME PERMETTANT DE FAIRE TOURNER DES TUBES

(30) Priority: 21.08.2015 FI 20155597
(43) Date of publication of application: 22.02.2017
(73) Proprietor: Welner Oy, 90620 Oulu (FI)
(72) Inventor: IMPIÖ, Markku, 90910 Kontio (FI)
(74) Representative: Heinonen & Co

(56) References cited:
- EP-A1- 2 818 273
- WO-A1-81/00821
- WO-A1-2012/055822
- WO-A2-2004/065057
- US-A- 3 572 199

## Description

### TECHNICAL FIELD

The invention relates to pipe rotators and to an applicable system according to the preamble of claim 1 (see for example EP 2818273 A1).

### BACKGROUND OF THE INVENTION

In pipe processing, such as pipe welding, pipe rotators are used. In industrial pipe welding, for instance, large pipe sizes are rotated by means of bulky and heavy rotators situated beneath the pipe. The welders work in different job sites, and, in addition, weld a great variety of objects. The heavy and unwieldy pipe rotators are not suitable to these varying uses.

The welders often use pipe stands as an aid for handling and rotating the pipes. With pipe stands, however, the welders have to rotate the pipe with their hands. It is not rare that small and medium sized pipes still have to be rotated manually. The manual rotation of the pipes makes the welding both slow and difficult. This results in welding inaccuracy and uneven weld quality. Today, welding joints have to meet very high quality and standard requirements. The pipes are x-rayed afterwards to assure the weld quality. This requires the welds to be of an especially high quality.

As the welder rotates the pipe with his hands, he always has to interrupt his work and put his tools down for the time period of the rotation of the pipe. The work is continually interrupted and it becomes difficult to control the quality of the work. The manual rotation also results in an irregular rotational speed. Typically, the manual rotation also causes a lot of errors at the beginning and at the end of the welding. Further, if the pipe is supported on the pipe stand by means of a chain, for instance, it becomes hard to rotate the pipe. The pipe easily gets scratched by the chain directly contacting the surface of the pipe. It also becomes harder to rotate the pipe if the chain is tightened directly against the surface of the pipe.

### SUMMARY OF THE INVENTION

An objective of the present invention is to alleviate the above-mentioned problems encountered in the rotation of pipes. In particular, but without any limitation, the present invention aims at facilitating the rotation of small and medium sized pipes. A second objective is to manufacture a device that is easily movable and that can serve as an accessory to the existing pipe stands. A third objective is to manufacture a device that reduces the number of errors occurring at the beginning and at the end of welding. A fourth objective is to manufacture a pipe rotator that can supported on the pipe to be rotated, preferably by means of a tightenable chain, with the chain not directly contacting the surface of the pipe.

The pipe rotator of the invention is characterized in what is set forth in the characterizing part of the independent claim 1.

The system of the invention is defined in claim 8. Preferred embodiments of the invention are disclosed in the dependent claims.

According to an aspect of the invention, the pipe rotator of the invention, which is connectable to the existing pipe stands, comprises -at least one motorized, pipe rotating roll situated above the pipe.

According to an embodiment of the invention, the pipe rotator comprises two rotating rolls.

According to an embodiment of the invention, the rotator comprises a substantially vertical frame and an upper support pivotably connected to the frame, the motorized, pipe rotating roll being connected to the upper support. According to an embodiment, the upper support, in its position of use, extends at an angle of substantially 90 degrees to the frame. In some embodiments, the rotating roll is movable in the longitudinal direction of the upper support.

According to an embodiment of the invention, the rotator comprises a gas spring, the gas spring being fastened to the frame and the supper support, to pivot the upper support, by the gas spring, to an upper position, from its position of use. According to an embodiment of the invention, the gas spring is a pushing gas spring, the gas spring being fastened to the frame and the upper support to pivot the upper support to the upper position by the pushing force of the gas spring. According to an embodiment of the invention, the gas spring is a pulling gas spring, the gas spring being fastened to the frame, and to an extension of the upper support, to pivot the upper support to the upper position by the pulling force of the gas spring.

According to an embodiment of the invention, the rotator comprises a fastening member, the fastening member being fastened to the pipe stand, and the fastening member comprises fastening means to fasten the frame to the fastening member. According to an embodiment of the invention, the height of the rotating roll of the rotator is adjustable by moving the frame with respect to the fastening member, and the fastening member comprises quick fasteners to lock the frame at the right height.

According to the invention, guiding means are provided around the upper support of the rotator, the guiding means being adapted to guide a chain belonging to a chain tightener and running around the upper support. According to an embodiment of the invention, the guiding means are guiding rolls. According to an embodiment, the guiding means are (fixed) rods. According to an embodiment, the guiding means are at least two in number. According to an embodiment, the guiding means are three in number. According to an embodiment, one of the guiding means serves as a moving handle for the upper support. According to an embodiment, the guiding means serve as carrying handles for the rotator.

According to an embodiment of the invention, the rotator comprises a user interface for setting a rotational direction and/or the rotational speed. According to an embodiment of the invention, the rotator comprises a foot pedal to start and/or stop the rotating roll.

In another aspect of the invention, the system for rotating a pipe according to the invention comprises
- a pipe rotator comprising
   - a substantially vertical frame,
   - an upper support pivotally connected to the frame,
   - at least one motorized, pipe rotating roll, the roll being provided in the upper support in such a way that the roll is situated above the pipe, and
- a pipe stand, the pipe rotator being attachable/detachable to the pipe stand.

According to an embodiment of the invention, the pipe stand is an AMA pipe stand. According to an embodiment of the invention, the pipe stand comprises supporting rolls, the pipe to be rotated being rotatable on these supporting rolls.

According to an embodiment of the invention, the system comprises a chain tightener, the chain tightener being adapted to press the rotating roll against the pipe.

According to an embodiment of the invention, the pipe stand comprises guiding means, the guiding means guiding the chain of the chain tightener around the supporting rolls, with the chain not contacting the pipe to be rotated. According to an embodiment of the invention, the guiding means of the pipe stand are at least two holes in the bottom of the pipe stand. According to the invention, guiding means are provided around the upper support of the pipe rotator, the guiding means being adapted to guide the chain of the chain tightener around the upper support. According to an embodiment of the invention, the pipe rotator comprises at least two guiding means, the guiding means being fixed rods, or, rotating rolls around the upper support.

According to an embodiment of the invention, the chain of the chain tightener is provided to extend from below the supporting rolls, through the guiding means of the pipe stand, and around the guiding means of the upper support, thus pressing the rotating roll against the pipe to be rotated.

The utility of the pipe rotator of the invention arises from a number of facts. With a pipe rotator according to an embodiment, it is preferred to rotate small and medium sized pipes. A pipe rotator according to an embodiment may be easily movable and easily removable from/connectable to any existing pipe (welding) stands. A pipe rotator according to an embodiment may allow the rotational direction and the rotational speed to be easily set. It may also be possible, if necessary, to easily move the rotating roll aside from the working area. A pipe rotator according to an embodiment may preferably allow the rotating roll to be pressed against the pipe to be rotated. According to an embodiment, the tightenable chain can be adapted not to be directly pressed against the surface of the pipe, and, consequently, not to hinder the rotation of the pipe.

In this application, the term "number" refers to any positive integer, starting from one (1), such as to one, two or three.

### BRIEF DESCRIPTION OF THE DRAWINGS

In the following, preferred embodiments of the invention will be described in more detail with reference to the accompanying drawings in which
- Figure 1a: is an exemplary lateral view of a pipe rotator according to an embodiment of the present invention,
- Figure 1b: shows the pipe rotator of Figure 1a from another angle of view,
- Figure 2: is an exemplary view of a pipe rotator according to an embodiment of the present invention, connected to a pipe stand and supported in its position of use by a chain tightener,
- Figure 3: is an exemplary view of a pipe rotator according to an embodiment of the present invention connected to a pipe stand, illustrating holes in the bottom of the pipe stand as well as an user interface on the pipe rotator,
- Figure 4: is an exemplary view of a pipe rotator according to an embodiment of the present invention, in an upper position, with a pushing gas spring, and
- Figure 5: is an exemplary view of a pipe rotator according to an embodiment of the present invention, in an upper position, with a pulling gas spring.

### MORE DETAILED DESCRIPTION OF THE DRAWINGS

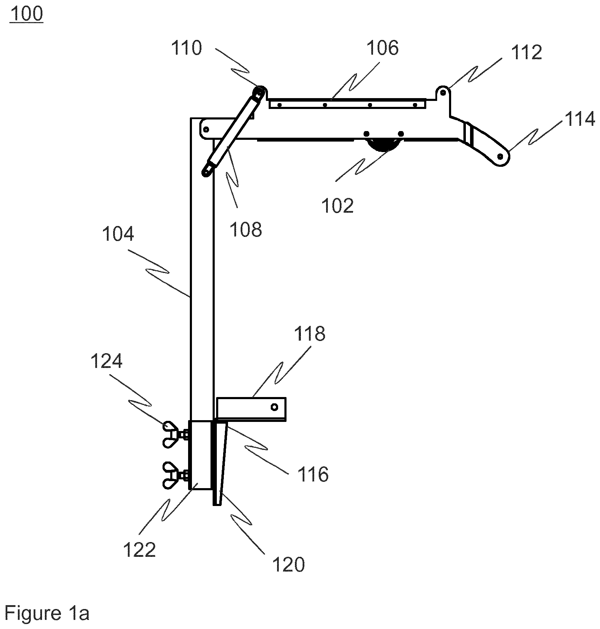

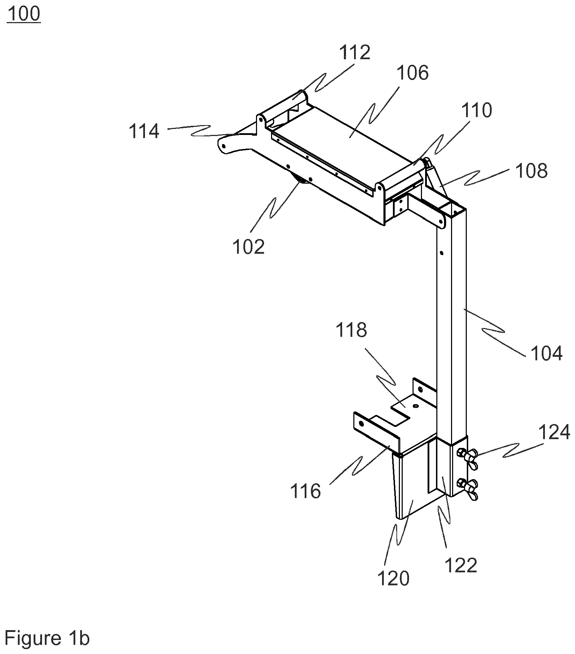

Figures 1a and 1b are two perspective views of a pipe rotator according to an embodiment. The pipe rotator 100 comprises a motorized, pipe rotating roll 102 situated above the pipe. The surface of the roll 102 can be made of wear rubber, for instance. As an example, the motor rotating the roll is an electric motor. The roll 102 can be provided on its own shaft and the electric motor can be adapted to rotate the roll 102 by a toothed belt, for instance.

The pipe rotator 100 comprises a substantially vertical frame 104. As an example, the frame can be a hollow steel pipe. The pipe rotator also comprises an upper support 106 which usually is pivotally connected to the frame 104. In its position of use, the upper support 106 is substantially horizontal. The upper support 106 may comprise a box-shaped structure into which the rotating roll's 102 motor can be fitted. The parts of the upper support can be made of steel, plastic or any other suitable material. The rotating roll 102 is provided in the upper support, with a part of the rotating roll lower than the bottom of the upper support.

The pipe rotator 100 comprises a gas spring 108 fastened, at one end, to the frame 104, and, at the other end, to the upper support 106. In some embodiments, the gas spring attempts to push the upper support from its position of use to an upper position. An example of the upper position is that the upper support extends at an angle of substantially 55 degrees to the horizontal. In some embodiments, the upper support may turn more than 55 degrees, in the upper position, while, in some embodiments, it may turn less than that. In some embodiments, the gas spring turns the upper support straight upwards, that is, to an angle of 90 degrees, from its position of use.

Guiding means 110, 112, 114 are provided around the structure of the upper support 106. The guiding means can be rolls, or, fixed rods, for instance. The guiding means are provided around the structure of the upper support to guide a chain belonging to a chain tightener. The guiding means 110, 112, 114 also serve as carrying handles for the pipe rotator. The guiding means 110, 112, 114 also serve as a protective structure for the pipe rotator. It is possible that the guiding means are subjected hits as the pipe rotator is moved and handled. The guiding means 114 also serves a moving handle for the upper support 106. The guiding means 114 allows a user to easily move the upper support to an upper position and/or to its position of use. In some embodiments, the spring attempts to push the upper support to the upper position. Hence, the user can push/pull the upper support, by means of the guiding means 114, to its position of use. As the user releases the guiding means, the upper support is automatically moved to the upper position.

The fastening member 116 comprises two plates 118, 120 substantially perpendicular to each other. The upper plate 118 is fastened to a pipe stand by screws, for instance. A fastening means, such as a hollow mount holder 122, into which the frame 104 of the pipe stand fits, is provided on the lower plate 120. The mount holder 122 comprises quick fasteners 124, such as screwable fasteners or locking pins with spring. The quick fasteners 124 lock the frame 104 at a desired height. The frame 104 may comprise a number of holes receiving the quick fasteners 124 that lock the frame at a given height.

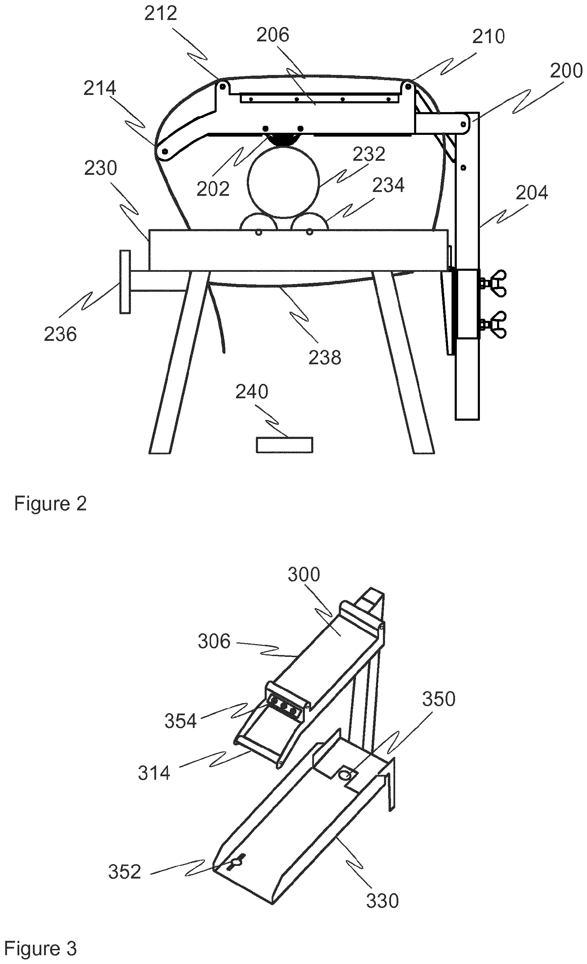

Figure 2 shows a pipe rotator 200 according to an embodiment of the present invention, connected to a pipe stand 230. The pipe stand 230 comprises supporting rolls 234 situated under the pipe, to allow the pipe to rotate on them. The pipe stand also comprises a chain tightener 236. The chain 238 of the chain tightener is provided around the upper support 206, the chain keeping the upper support 206 in its position of use. The chain 238 is adapted to cause the rotating roll 202 to press against the pipe 232. The chain 238 is provided to run from the chain tightener 236, from under the supporting rolls 234, to the frame 204 side. Further, the chain is adapted to run, through a bottom hole provided in the pipe stand, around a guiding roll 210, and, further, therefrom, around guiding rolls 212 and 214. Further, the chain is adapted to run, therefrom, through a locking hole provided in the bottom, down to the chain tightener 236. The chain tightener creates the pressing force of the pipe rotator 200.

In this application, the above-described pipe stand 230 is called an AMA pipe stand.

The pipe rotator 200 comprises a foot pedal 240. The foot pedal can be wired or wireless. In some embodiments, the foot pedal only has on/off. In some embodiments, the foot pedal allows setting the rotational direction and/or the rotational speed of the rotating roll 202.

Figure 3 is a view of a pipe rotator 300 according to an embodiment connected to a pipe stand 330, illustrating holes 350, 352 provided for the chain of the chain tightener. The bottom of the pipe stand comprises a guiding hole 350 through which the chain can be pulled up and around the upper support 306. The bottom of the pipe stand also comprises a locking hole 352 capable of locking the chain. The locking hole 352 comprises oblique cuts where the chain is locked.

The pipe rotator 300 comprises a user interface 354 from which the rotational direction and/or the rotational speed of the rotating roll 202 can be set. The user interface 354 is substantially provided in the front part of the upper support, near a guiding means 314, the guiding means 314 also serving as a moving handle for the upper support. The user interface may comprise a number of keys.

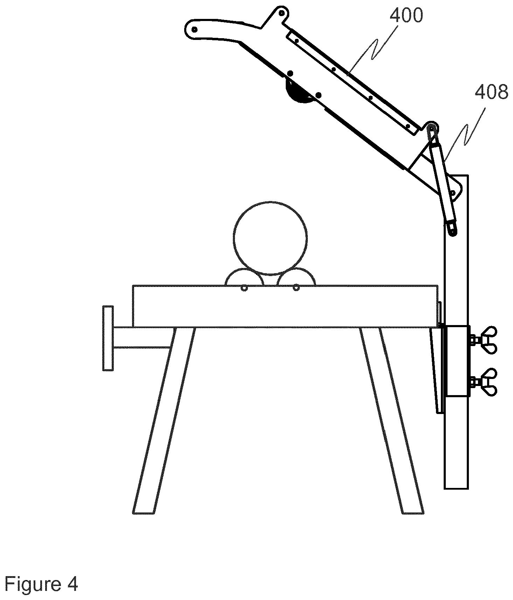

In Figure 4, a gas spring 408 provided in a pipe rotator 400 according to an embodiment of the present invention has pushed the upper support 406 from its position of use to an upper position. The gas spring 408 is a pushing spring.

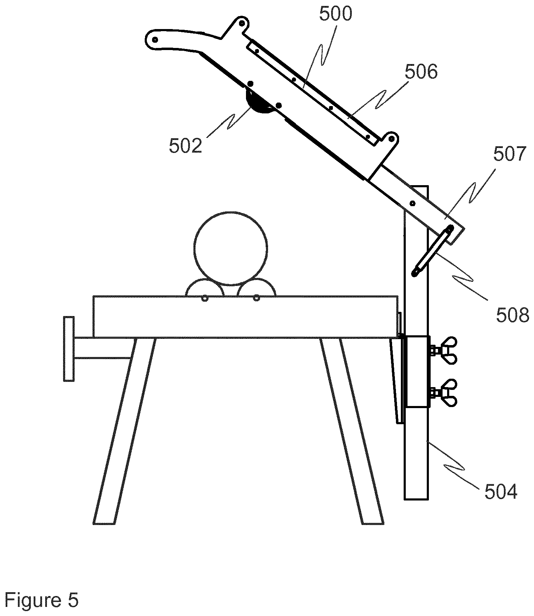

In Figure 5, a gas spring 508 provided in a pipe rotator 500 according to an embodiment of the present invention is fastened to the frame 504 and to an extension 507 of the upper support 506, the extension of the upper support extending to the rear of the frame, with respect to the rotating roll. The gas spring 508 is a pulling spring whose pulling force has moved the upper support 506 to an upper position.

Preferably, the pipe rotator according to the present invention is suitable for rotating pipes of pipe sizes DN25 to DN500.

The following claims define the scope of protection of the invention. However, it is obvious to a person skilled in the art that different features of the invention may vary in detail, to some extent, within the inventive idea, depending on the embodiment of invention.

## Claims

1. A pipe rotator (100, 200, 300, 400, 500) connectable to existing pipe stands (230, 330), the rotator comprising
- a substantially vertical frame (104, 204, 504),
- an upper support (106, 206, 306, 506) pivotally connected to the frame,
- at least one motorized, pipe rotating roll (102, 202, 502), the roll being arranged in the upper support such that the roll is situated above the pipe (232) **characterized in that**
guiding means (110, 112, 114) are arranged around the upper support of the rotator, the guiding means being arranged to guide a chain (238) of a chain tightener (236) around the upper support.

2. A rotator (100, 200, 300, 400, 500) as defined in claim 1, **characterized in that** the rotator comprises a gas spring (108, 408, 508), the gas spring being fastened to the frame (104, 204, 504) and to the upper support (106, 206, 306, 506), to turn the upper support, by the force of the gas spring, to an upper position, from its position of use.

3. A rotator (100, 200, 300, 400, 500) as defined in any of the preceding claims, **characterized in that** the rotator comprises a fastening member (116), the fastening member being fastened to the pipe stand (230, 330), and the fastening member comprising fastening means for fastening the frame to the fastening member.

4. A rotator (100, 200, 300, 400, 500) as defined in any of the preceding claims, **characterized in that** the height of the rotating roll (102, 202, 502) of the rotator is adjustable by moving the frame (104, 204, 504) with respect to the fastening member (116), and the fastening member comprising quick fasteners (124) to lock the frame at the right height.

5. A rotator (100, 200, 300, 400, 500) as defined in any of the preceding claims, **characterized in that** the rotator comprises at least two guiding means (110, 112, 114), the guiding means being fixed rods, or, rotating rolls around the upper support (106, 206, 306, 506).

6. A rotator (100, 200, 300, 400, 500) as defined in any of the preceding claims, **characterized in that** there are three guiding means (110, 112, 114), one of the guiding means serving as a turning handle for the upper support.

7. A rotator (100, 200, 300, 400, 500) as defined in any of the preceding claims, **characterized in that** the rotator comprises a user interface (354) for setting a rotational direction and/or a rotational speed, and a foot pedal (240) for starting and stopping the rotating roll.

8. A system for rotating a pipe comprising
- a pipe rotator (100, 200, 300, 400, 500) according to claim 1, the system further comprising,
- a pipe stand (230, 330), the pipe rotator being attachable/detachable to the pipe stand.

9. A system as defined in claim 8, **characterized in that** the pipe stand (230, 330) comprises supporting rolls (234), the pipe to be rotated being rotatable on the supporting rolls.

10. A system as defined in claims 8 and 9, **characterized in that** the system comprises a chain tightener (236), the chain tightener being arranged to press the rotating roll (102, 202, 502) against the pipe.

11. A system as defined in claims 8 to 10, **characterized in that** the pipe stand (230, 330) comprises guiding means (350, 352), the guiding means guiding the chain (238) of the chain tightener (236) around the supporting rolls such that the chain is not in contact with the pipe to be rotated.

12. A system as defined in claim 11, **characterized in that** the guiding means (350, 352) of the pipe stand are at least two holes in the bottom of the pipe stand (230, 330).

13. A system as defined in claim 8-12, **characterized in that** the pipe rotator comprises at least two guiding means (110, 112, 114), the guiding means being fixed rods, or, rotating rolls arranged around the upper support.

## Patentansprüche

1. Rohrdrehvorrichtung (100, 200, 300, 400, 500), die mit vorhandenen Rohrgestellen (230, 330) verbunden werden kann, wobei die Drehvorrichtung Folgendes umfasst
- einen im Wesentlichen vertikalen Rahmen (104, 204, 504),
- eine obere Halterung (106, 206, 306, 506), die schwenkbar mit dem Rahmen verbunden ist,
- mindestens eine motorisierte Rolle (102, 202, 502) zum Drehen von Rohren, wobei die Rolle derart in der oberen Halterung angeordnet ist, dass sich die Rolle oberhalb des Rohres (232) befindet, **dadurch gekennzeichnet, dass**
Führungsmittel (110, 112, 114) um die obere Halterung der Drehvorrichtung angeordnet sind, wobei die Führungsmittel angeordnet sind, um eine Kette (238) eines Kettenspanners (236) um die obere Halterung zu führen.

2. Drehvorrichtung (100, 200, 300, 400, 500) nach Anspruch 1, **dadurch gekennzeichnet, dass** die Drehvorrichtung eine Gasdruckfeder (108, 408, 508) umfasst, wobei die Gasdruckfeder an dem Rahmen (104, 204, 504) und an der oberen Halterung (106, 206, 306, 506) befestigt ist, um die obere Halterung durch die Kraft der Gasdruckfeder in eine zu ihrer Gebrauchsposition höhere Position umzustellen.

3. Drehvorrichtung (100, 200, 300, 400, 500) nach einem der vorhergehenden Ansprüche, **dadurch gekennzeichnet, dass** die Drehvorrichtung ein Befestigungselement (116) umfasst, das an dem Rohrgestell (230, 330) befestigt ist, und wobei das Befestigungselement Befestigungsmittel zum Befestigen des Rahmens an dem Befestigungselement umfasst.

4. Drehvorrichtung (100, 200, 300, 400, 500) nach einem der vorhergehenden Ansprüche, **dadurch gekennzeichnet, dass** die Höhe der drehenden Rolle (102, 202, 502) der Drehvorrichtung durch Bewegen des Rahmens (104, 204, 504) in Bezug auf das Befestigungselement (116) einstellbar ist, und wobei das Befestigungselement Schnellbefestigungsmittel (124) umfasst, um den Rahmen in der richtigen Höhe festzustellen.

5. Drehvorrichtung (100, 200, 300, 400, 500) nach einem der vorhergehenden Ansprüche, **dadurch gekennzeichnet, dass** die Drehvorrichtung mindestens zwei Führungsmittel (110, 112, 114) umfasst, wobei die Führungsmittel feste Stangen oder drehende Rollen um die obere Halterung (106, 206, 306, 506) sind.

6. Drehvorrichtung (100, 200, 300, 400, 500) nach einem der vorhergehenden Ansprüche, **dadurch gekennzeichnet, dass** drei Führungsmittel (110, 112, 114) vorhanden sind, wobei eines der Führungsmittel als Drehgriff für die obere Halterung dient.

7. Drehvorrichtung (100, 200, 300, 400, 500) nach einem der vorhergehenden Ansprüche, **dadurch gekennzeichnet, dass** die Drehvorrichtung eine Bedienoberfläche (354) zum Einstellen einer Drehrichtung und/oder einer Drehgeschwindigkeit, und ein Fußpedal (240) zum Starten und Stoppen der drehenden Rolle umfasst.

8. System zum Drehen eines Rohres, das Folgendes umfasst
- eine Rohrdrehvorrichtung (100, 200, 300, 400, 500) nach Anspruch 1, wobei das System ferner Folgendes umfasst
- ein Rohrgestell (230, 330), wobei die Rohrdrehvorrichtung an/von dem Rohrgestell befestigt/abgenommen werden kann.

9. System nach Anspruch 8, **dadurch gekennzeichnet, dass** das Rohrgestell (230, 330) Stützrollen (234) umfasst, wobei das Rohr, das gedreht werden soll, auf den Stützrollen drehbar ist.

10. System nach Anspruch 8 und 9, **dadurch gekennzeichnet, dass** das System einen Kettenspanner (236) umfasst, wobei der Kettenspanner so angeordnet ist, dass er die Drehrolle (102, 202, 502) gegen das Rohr drückt.

11. System nach Anspruch 8 bis 10, **dadurch gekennzeichnet, dass** das Rohrgestell (230, 330) Führungsmittel (350, 352) umfasst, wobei die Führungsmittel die Kette (238) des Kettenspanners (236) derart um die Stützrollen führen, dass die Kette das Rohr, das gedreht werden soll, nicht berührt.

12. System nach Anspruch 11, **dadurch gekennzeichnet, dass** die Führungsmittel (350, 352) des Rohrgestells mindestens zwei Öffnungen in dem Boden des Rohrgestells (230, 330) sind.

13. System nach Anspruch 8 - 12, **dadurch gekennzeichnet, dass** die Drehvorrichtung mindestens zwei Führungsmittel (110, 112, 114) umfasst, wobei die Führungsmittel feste Stangen oder drehende Rollen sind, die um die obere Halterung angeordnet sind.

## Revendications

1. Dispositif rotateur de tube (100, 200, 300, 400, 500) connectable à des supports de tube existants (230, 330), le dispositif rotateur comprenant
- un châssis substantiellement vertical (104, 204, 504),
- un support supérieur (106, 206, 306, 506) connecté de façon pivotante au châssis,
- au moins un rouleau de rotation de tube motorisé (102, 202, 502), le rouleau étant agencé dans le support supérieur de telle sorte que le rouleau se trouve au-dessus du tube (232), **caractérisé en ce que**
des moyens de guidage (110, 112, 114) sont agencés autour du support supérieur du dispositif rotateur, les moyens de guidage étant agencés pour guider une chaîne (238) d'un tendeur de chaîne (236) autour du support supérieur.

2. Dispositif rotateur (100, 200, 300, 400, 500) selon la revendication 1, **caractérisé en ce que** le dispositif rotateur comprend un ressort à gaz (108, 408, 508), le ressort à gaz étant fixé au châssis (104, 204, 504) et au support supérieur (106, 206, 306, 506) pour faire tourner le support supérieur, du fait de la force du ressort à gaz, depuis sa positon d'utilisation jusqu'à une position supérieure.

3. Dispositif rotateur (100, 200, 300, 400, 500) selon l'une quelconque des revendications précédentes, **caractérisé en ce que** le dispositif rotateur comprend un élément de fixation (116), l'élément de fixation étant fixé au support de tube (230, 330), l'élément de fixation comprenant également un moyen de fixation pour fixer le châssis à l'élément de fixation.

4. Dispositif rotateur (100, 200, 300, 400, 500) selon l'une quelconque des revendications précédentes, **caractérisé en ce que** la hauteur du rouleau de rotation (102, 202, 502) du dispositif rotateur est ajustable en déplaçant le châssis (104, 204, 504) par rapport à l'élément de fixation (116), l'élément de fixation comprenant également des fixations rapides (124) pour verrouiller le châssis à la hauteur correcte.

5. Dispositif rotateur (100, 200, 300, 400, 500) selon l'une quelconque des revendications précédentes, **caractérisé en ce que** le dispositif rotateur comprend au moins deux moyens de guidage (110, 112, 114), les moyens de guidage étant des tiges fixes ou des rouleaux de rotation, agencés autour du support supérieur (106, 206, 306, 506).

6. Dispositif rotateur (100, 200, 300, 400, 500) selon l'une quelconque des revendications précédentes, **caractérisé en ce qu'**il y a trois moyens de guidage (110, 112, 114), l'un des moyens de guidage servant de poignée de rotation pour le support supérieur.

7. Dispositif rotateur (100, 200, 300, 400, 500) selon l'une quelconque des revendications précédentes, **caractérisé en ce que** le dispositif rotateur comprend une interface utilisateur (354) pour établir la direction de rotation et/ou la vitesse de rotation, ainsi qu'une pédale (240) pour démarrer et arrêter le rouleau de rotation.

8. Système de rotation d'un tube comprenant
- un dispositif rotateur de tube (100, 200, 300, 400, 500) selon la revendication 1, le système comprenant en outre
- un support de tube (230, 330), le dispositif rotateur de tube pouvant être attaché/détaché du support de tube.

9. Système selon la revendication 8, **caractérisé en ce que** le support de tube (230, 330) comprend des rouleaux de support (234), le tube à faire tourner pouvant tourner sur les rouleaux de support.

10. Système selon les revendications 8 et 9, **caractérisé en ce que** le système comprend un tendeur de chaîne (236), le tendeur de chaîne étant agencé pour pousser le rouleau de rotation (102, 202, 502) contre le tube.

11. Système selon les revendications 8 à 10, **caractérisé en ce que** le support de tube (230, 330) comprend des moyens de guidage (350, 352), les moyens de guidage guidant la chaîne (238) du tendeur de chaîne (236) autour des rouleaux de support de telle sorte que la chaîne n'est pas en contact avec le tube à faire tourner.

12. Système selon la revendication 11, **caractérisé en ce que** les moyens de guidage (350, 352) du support de tube sont au moins deux trous au fond du support de tube (230, 330).

13. Système selon les revendications 8 - 12, **caractérisé en ce que** le dispositif rotateur de tube comprend au moins deux moyens de guidage (110, 112, 114), les moyens de guidage étant des tiges fixes ou des rouleaux de rotation, agencés autour du support supérieur.
